# EUROPÄISCHE PATENTSCHRIFT

(11) **EP 0 864 137 B1**
(45) Veröffentlichungstag und Bekanntmachung des Hinweises auf die Patenterteilung: **04.06.2003**
(21) Anmeldenummer: 97944792.7
(22) Anmeldetag: 26.08.1997
(51) Int. Cl.: G07C 7/00, G01P 1/14, A47B 88/04

(54) **FAHRTSCHREIBER MIT EINER SCHUBLADE**
TACHOGRAPH WITH DRAWER
ENREGISTREUR DE MARCHE AVEC TIROIR

(30) Priorität: 05.09.1996 DE 19635965
(43) Veröffentlichungstag der Anmeldung: 16.09.1998
(73) Patentinhaber: SIEMENS AKTIENGESELLSCHAFT, 80333 München (DE)
(72) Erfinder: HÖNI, Helmut, D-78733 Aichhalden (DE)
(86) Internationale Anmeldenummer: EP9704637
(87) Internationale Veröffentlichungsnummer: WO98010380

(56) Entgegenhaltungen:
- EP-A- 0 309 854
- EP-A- 0 624 856
- EP-A- 0 709 683
- DE-A- 19 536 515
- DE-A- 19 545 354
- DE-U- 29 604 323

## Beschreibung

Die Erfindung betrifft einen Fahrtschreiber mit einer Schublade, in welcher die Zentrier- und Mitnahmemittel für die als Aufzeichnungsträger dienenden Diagrammscheiben gelagert und mit welcher eingelegte Diagrammscheiben zwischen einer Registrier- und einer Eingabe-/Entnahmeposition bewegbar sind sowie mit Mitteln, welche ein exaktes Ausrichten und ein Verriegeln der Schublade in der Registrierposition gestatten.

Fahrtschreiber mit einer Schub- oder Schwenklade für den Transport von Diagrammscheiben zwischen der Einlege-/Entnahmeposition und der Registrierposition bieten im Vergleich mit solchen mit einem aufklappbaren Deckel aufgrund der kleineren, rechteckförmigen Frontfläche den Vorzug einer größeren Gestaltungsfreiheit hinsichtlich der Anordnung der Instrumente einer Armaturentafel. Gegenüber Fahrtschreibern mit selbsttätigem Einzug von durch einen Schlitz eingebbaren Diagrammscheiben, die ihrerseits insbesondere was den Raumbedarf von dem Gerät bzw. der Armaturentafel anbelangt die beste Lösung darstellen, bietet die gattungsgemäße Bauweise den Vorteil der geringeren Störanfälligkeit infolge klimatisch bedingter Veränderungen der Diagrammscheiben sowie eines weitgehend reduzierten technischen Aufwandes durch Verzicht auf einen selbsttätigen Einzug und Auswurf der Diagrammscheiben.

Demgegenüber ist es bei einer Schublade erforderlich, daß sie leicht beweglich ist, das heißt, daß für die Führungsmittel der Schublade relativ große Toleranzen vorgesehen werden müssen. Dies steht im Widerspruch zu der Forderung, daß während des Registrierens eine spielfreie und stets reproduzierbare Positionierung der Schublade gegeben sein muß und Vibrationen der Schublade ausgeschlossen bzw. in bezug auf die Aufzeichnungen unwirksam sind.

Die Aufgabe der vorliegenden Erfindung war es somit in einem Fahrtschreiber mit einer Schublade als Träger für die Diagrammscheiben und deren Antriebsmittel Mittel vorzusehen, welche ein exaktes Ausrichten und ein Verriegeln der Schublade in der Registrierposition gestatten, wobei die Mittel großseriengerecht gestaltet und mit möglichst geringem Aufwand herstellbar sind.

Die Lösung der Aufgabe beschreibt der Patentanspruch 1. Vorteilhafte Ausgestaltungen der Erfindung gehen aus den Unteransprüchen hervor.

Als Vorteil der gefundenen Lösung ist hervorzuheben, daß eine als Wippe gelagerte, u-förmig ausgebildete Brücke vorgesehen ist, die in bezug auf die Seitenwände und die Frontwand des quaderförmigen Gehäuse des Fahrtschreibers im wesentlichen formatfüllend ausgebildet ist und somit wenig Bauraum beansprucht. Dabei ist die Brücke derart gestaltet, daß ihre Schenkel rechtwinklig zur Drehachse der Brücke, die vorzugsweise mittels zweier in der Drehachsebene spielfreien Biegefedergelenken realisiert ist, starr ausgebildet sind und in Richtung der Drehachse eine gewisse Federungsfähigkeit aufweisen. Diese Gestaltung bietet die Voraussetzung dafür, daß den an den Schenkeln der Brücke angebrachten Fixierzapfen in der Schublade den Abmessungen der Fixierzapfen entsprechende Senkungen zugeordnet werden können, das heißt mittels einer maßlichen Überbestimmung bewußt eine Verspannung in Richtung der Drehachse hergestellt werden kann, durch die garantiert ist, daß beide Schenkel der Brücke an der Fixierung der Schublade beteiligt sind.

Erwähnenswert ist ferner, daß die Fixierzapfen und die zugeordneten Senkungen derart konisch ausgebildet sind, daß die so geschaffene Keilverbindung im Zusammenwirken mit der Lage der Drehachse in bezug auf ein Herausziehen der Schublade selbsthemmend wirkt, das heißt, es ist ein in geeigneter Weise gesteuerter Entriegelungsvorgang erforderlich, um die geschlossene Schublade zum Öffnen freizugeben. Von Vorteil insbesondere was die Aufzeichnungssicherheit anbelangt ist außerdem, daß die Fixierzapfen der Schublade derart zugeordnet sind, daß sie in einer Ebene liegen, welche die Ebene, in welcher sich die Spitzen der Registrierorgane bewegen, schneidet. Um einerseits die Biegefedern der Gelenke der Brücke im geschlossenen Zustand der Schublade zu entlasten, andererseits eine relativ hohe Richt- und Verriegelungskraft wirksam werden zu lassen, sind vorzugsweise zwei an den Schenkeln der Brücke angreifende Schenkelfedern vorgesehen, die beim Schließen der Schublade aufgrund der an der Schublade vorgesehenen den Fixierzapfen zugeordneten schiefen Ebenen mühelos gespannt werden können.

Bei dem im folgenden beschriebenen Ausführungsbeispiel sind die Biegefedergelenke der Brücke an einer im Fahrtschreiber vorgesehenen Montageplatte befestigt. Es ist jedoch auch möglich die Befestigung der Biegefedergelenke und der Lagerungen für die Schenkelfedern unmittelbar an den Seitenwänden des Gehäuses des Fahrtschreibers vorzunehmen.

Von den Zeichnungen des erwähnten Ausführungsbeispiels zeigen:
Figur 1 eine Frontansicht eines mit einer Schublade als Träger für die Diagrammscheiben ausgerüsteten Fahrtschreibers,
Figur 2 eine als Übersichtsdarstellung gedachte Draufsicht von lediglich Gehäuse und Schublade des Fahrtschreibers gemäß Figur 1 sowie einen Freischnitt zur Darstellung einer der Schublade zugeordneten Auswerffeder,
Figur 3 eine Perspektivdarstellung einer, ein wesentliches Element der Erfindung bildenden Brücke,
Figur 4 eine Draufsicht einer als Baueinheit in den Fahrtschreiber einsetzbaren Montageplatte, auf der lediglich die dem Ausrichten und Verriegeln der Schublade dienende Brücke befestigt ist,
Figur 5 eine schematische Darstellung der bei der Verriegelung der Schublade, zusammenwirkenden Bauteile und Baugruppen,
Figur 6 eine Ausschnittvergrößerung gemäß des Schnittes B in Figur 5 mit einer Ansicht der der Entriegelung zur Öffnung der Schublade dienenden Kurvenscheiben.

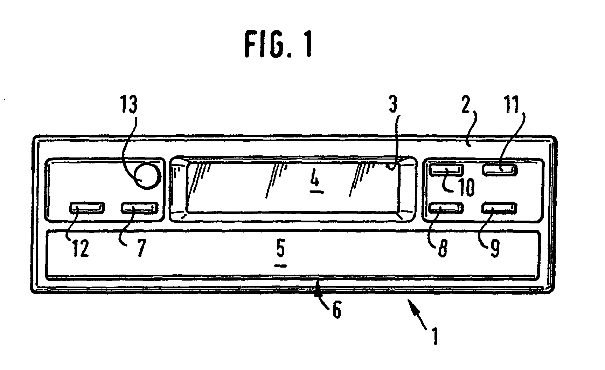

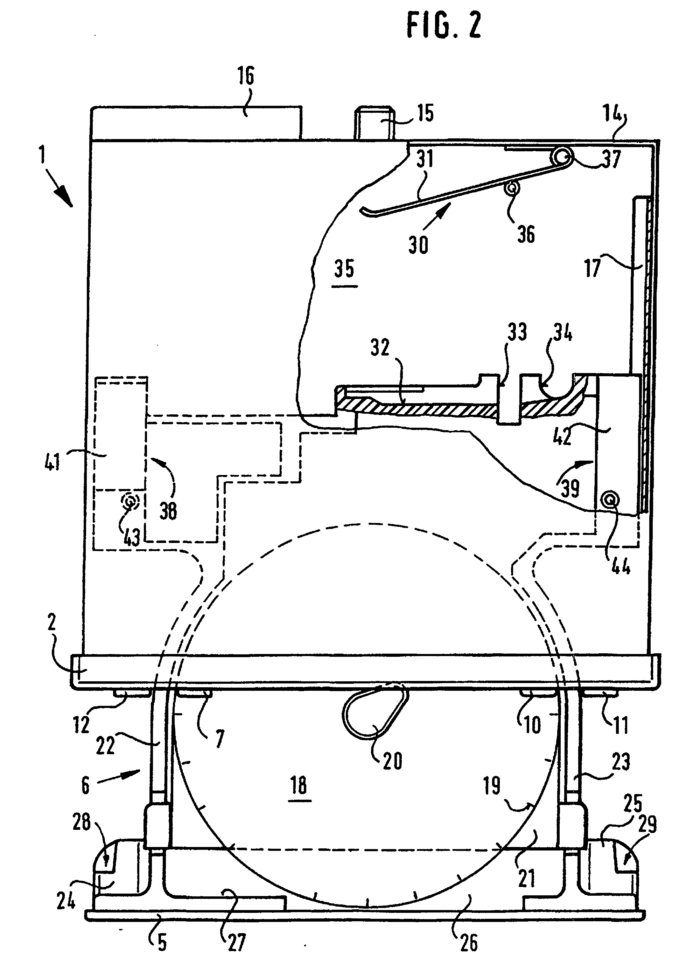

In Figur 1 ist mit 1 das quaderförmige Gehäuse des als Ausführungsbeispiel gewählten Fahrtschreibers bezeichnet, an dessen Frontfwand 2 ein Fensterausschnitt 3 für ein der Frontwand 2 zugeordnetes Display 4 ausgebildet ist. 5 stellt die frontseitige Blende einer in dem Gehäuse 1 geführten Schublade 6 dar. Von in der Frontwand 2 gelagerten Tasten 7, 8, 9, 10, 11 und 12 sind die Tasten 7 und 8 sowie die als Menütaste bezeichnete Taste 9 dem Fahrer beziehungsweise dem Beifahrer zum Anwählen wenigstens der wichtigsten Arbeitszeitdaten zugeordnet. Die Tasten 10 und 11 dienen dem Vor- und Rückwärtsblättern in den jeweils angewählten Datensätzen, die Taste 12 ist für das Entriegeln und Freigeben der Schublade 6 vorgesehen. Mittels einer mit 13 bezeichneten Plombe ist der Zugang zu einer Diagnosebuchse gesichert. Der Vollständigkeit halber sei erwähnt, daß, was auch aus der Figur 2 ersichtlich ist, der dargestellte Fahrtschreiber als Einbaugerät ausgebildet ist. Dementsprechend ist an der Rückwand 14 des Gehäuses 1 ein als Gewindebuchse oder Gewindeschaft ausgebildeter Richtzapfen 15 befestigt. Mit 16 ist ein ebenfalls der Rückwand 14 zugeordneter Steckersockel bezeichnet.

Ferner läßt sich der Figur 2 entnehmen, daß an den nicht näher bezeichneten Seitenwänden des Gehäuses 1 der Schublade 6 zugeordnete Führungsschienen, von denen in Figur 2 eine dargestellt und mit 17 bezeichnet ist, befestigt sind. Mit 18 ist eine in den Fahrtschreiber eingelegte Diagrammscheibe bezeichnet, die eine Stundenskale 19 trägt, bei deren Darstellung sonst aber auf Ziffern und das übliche Netzwerk zur Interpretation der Aufzeichnungen der Einfachheit halber verzichtet wurde. Die Diagrammscheibe 18 ist auf einem unrund ausgebildeten Zentrier- und Mitnahmedorn 20 aufgenommen, welche an einer nicht dargestellten Auflage angeformt ist, die von einem in der Schublade 6 untergebrachten Laufwerk uhrzeitrichtig angetrieben wird.

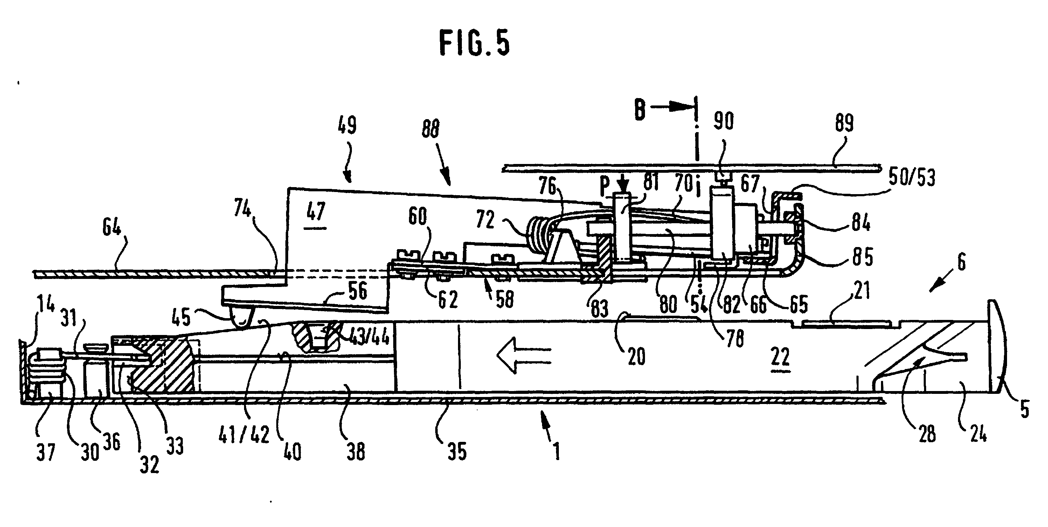

Der Vollständigkeit halber sei noch darauf hingewiesen, daß der Fahrtschreiber für die Aufnahme von zwei in einem gewissen Abstand übereinander liegenden Diagrammscheiben ausgerüstet ist. In Figur 2 ist eine diesem Zweck dienende, zwischen den beiden Diagrammscheiben schwenkbar angeordnete Platte 21 dargestellt, die sich auf seitlichen Wangen 22, 23 der Schublade 6 abstützt und der oben liegenden Diagrammscheibe 18 als Registrierunterlage dient. Im Boden 26 der Schublade 6 ist ein Durchbruch 27 vorgesehen, damit die Diagrammscheiben bei der Entnahme besser gegriffen werden können. Mit 24 und 25 sind an der Schublade 6 angeformte Ansätze bezeichnet, in welchen Führungsschlitze 28 und 29 ausgebildet sind. Das heißt, die Ansätze dienen der Lagefixierung des vorderen Bereichs der Schublade 6, wenn diese geschlossen ist. Bei geschlossener Schublade 6 wirkt eine im Gehäuse 1 gelagerte, als Schenkelfeder ausgebildete Auswerffeder 30 auf die Schublade 6 ein. Dabei greift ein Schenkel 31 der Auswerffeder 30 in eine an der Rückseite der Schublade 6 ausgebildete Nut 32 ein. Mit 33 und 34 sind einem am Boden 35 des Gehäuses 1 befestigten Anschlagstift 36 und einem Lagerzapfen 37 der Auswerffeder 30 schubladenseitig zugeordnete Freisparungen bezeichnet. Mit 38 und 39 sind an der tailiert ausgebildeten Schublade 6 ausgeformte mit geeigneten Schlitzen - in Figur 5 ist einer dargestellt und mit 40 bezeichnet - versehene Führungsbacken bezeichnet. An den Führungsbacken 38, 39 sind schiefe Ebenen 41 und 42 ausgebildet und diesen konische Senkungen 43 und 44 zugeordnet.

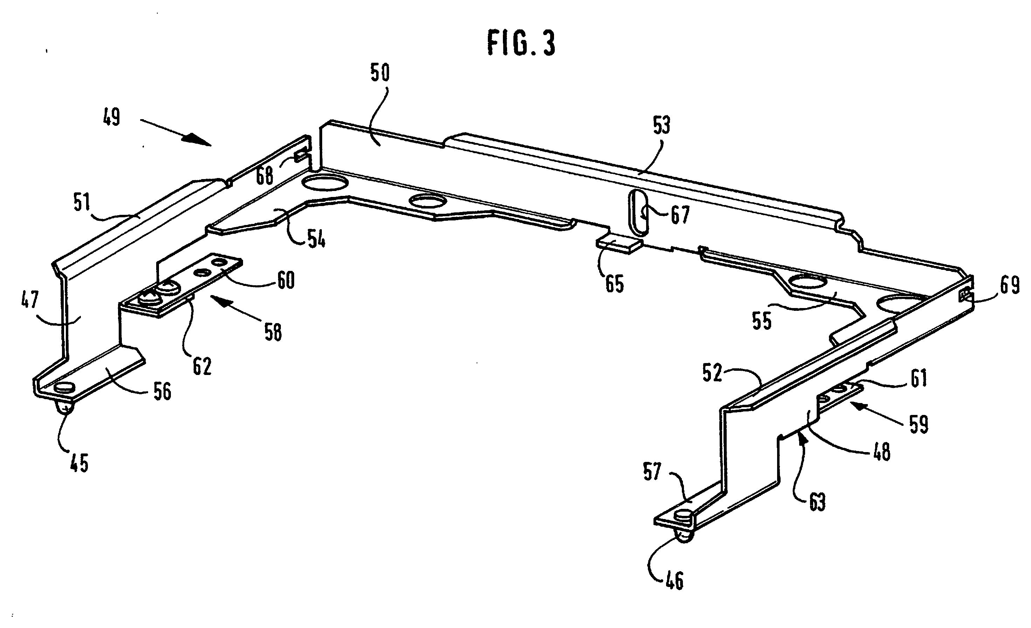

In diese greifen, wenn die Schublade 6 geschlossen ist ebenfalls konisch gestaltete Fixierzapfen 45 und 46, die an den Enden der Schenkel 47 und 48 einer u-förmig gestalteten Brücke 49 befestigt sind, ein. Die perspektivische Darstellung der Brücke 49 (Figur 3) zeigt, daß die Schenkel 47, 48 sowie das Joch 50 der Brücke 49 durch abgekantete Leisten 51, 52 und 53 versteift und über relativ große Längen angreifende Eckverbinder 54 und 55 miteinander verbunden sind. Auf diese Weise stellt die Brücke 49 ein Bauteil von hoher Steifigkeit bei geringstem Raumbedarf dar. Lediglich die Enden der Schenkel 47 und 48, an denen an angebogenen Trägern 56 und 57 die Fixierzapfen befestigt sind, bieten eine gewisse Federungsfähigkeit in Richtung der Drehachse der als Wippe ausgebildeten Brücke 49. Bei dem vorliegenden Ausführungsbeispiel wird die Drehachse mittels zweier Biegefedergelenke 58 und 59, deren Blattfedern 60 und 61 beispielsweise mittels nicht näher bezeichneter Schrauben einerseits auf an der Brücke 49 angeformten Konsolen 62 und 63 andererseits auf einer Montageplatte 64 befestigt sind, verwirklicht. Mit 65 ist ein am Joch 50 der Brücke 49 angeformter Lappen bezeichnet, welcher, was nachfolgend noch näher erläutert wird, zum Entriegeln der Schublade 6 mit einer Kurvenscheibe 66 zusammenwirkt. Eine schlitzförmige Öffnung 67 dient dem Durchtritt einer die Kurvenscheibe 66, tragenden in den nachfolgenden Figuren dargestellten Welle durch das Joch 50. Weitere in den Eckverbindern vorgesehene nicht bezeichnete Öffnungen dienen ebenfalls dem Durchgreifen von auf der Montageplatte 64 angeordneten, jedoch nicht erfindungsrelevanten Bauelementen. In den Schenkeln 47 und 48 der Brücke 49 ausgebildete Einschnitte 68 und 69 sind für das Einhängen jeweils eines Schenkels 70 beziehungsweise 71 von als Kraftspeicher dienenden und auf der Montageplatte 64 gelagerten Schenkelfedern 72 und 73 vorgesehen.

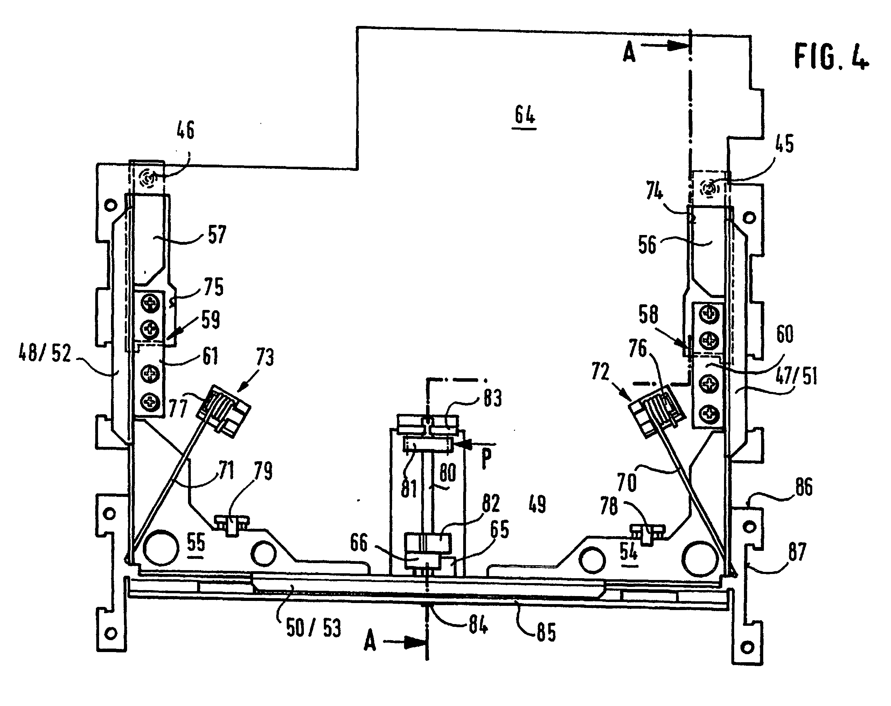

Wie aus der Draufsicht, Figur 4, ersichtlich ist, sind die Blattfedern 60 und 61 der Biegefedergelenke 58, 59 der Brücke 49 auf der Montageplatte 64 befestigt und die Schenkel 47, 48 der Brücke 49 greifen von der einen Seite der Montageplatte 64 durch geeignete Ausschnitte 74 und 75 auf die Gegenseite durch. Mit 76 und 77 sind den Schenkelfedern 72, 73 zugeordnete Lagerzapfen bezeichnet, die in Outserttechnik an der Montageplatte 64 angeformt sind. Außerdem sind in Figur 4 ebenfalls an der Montageplatte 64 angeformte Anschläge 78 und 79 dargestellt. Diese haben die Aufgabe den Schwenkwinkel der Brücke 49 bei geöffneter Schublade zu begrenzen und die Biegefeldergelenke 58, 59 zu entlasten. Dabei wirken die Anschläge 78, 79 mit den Eckverbindern 54, 55 der Brücke 49 zusammen. An dieser Stelle sei erwähnt, daß an der Montageplatte 64 eine Vielzahl von Halte- und Befestigungselemente sowie Lager für diverse Bauelemente und Funktionsgruppen des Fahrtschreibers insbesondere solchen, die dem Registrieren dienen, in Outserttechnik angeformt sind. Da diese Elemente nicht erfindungswesentlich sind sind sie der Übersichtlichkeit halber nicht dargestellt. Dies gilt auch für den Motor und das nachgeordnete des erforderlichen Drehmoments wegen hochuntersetzende Getriebe, welche die bereits erwähnte Welle 80 antreiben. Mittels des Pfeiles P soll lediglich der auf ein auf der Welle 80 befestigtes Zahnrad 81 gerichtete Kraftfluß des Getriebes symbolisch dargestellt sein. Die Welle 80 trägt außerdem die bereits erwähnte Kurvenscheibe 66 und eine Steuerkurve 82. Sie ist einerseits in einem an der Montageplatte 64 angeformten Lagerbock 83 andererseits in einer Buchse 84 gelagert. Letztere ist in einer an der Montageplatte 64 angebogenen Stirnwand 85 befestigt. Der Vollständigkeit halber sei noch erwähnt, daß die vormontierte Montageplatte 64 als funktionsfertige Baugruppe in den Fahrtschreiber einsetzbar ist, wobei an den Seitenwänden des Fahrtschreibers angebrachte Leisten als Auflage dienen. Dabei sind die aufliegenden Randbereiche der Montageplatte 64, wie die Figur 4 zeigt, durch geeignete Freistanzungen beispielsweise 86 oder 87 für eine mehrstellige und damit eindeutige Auflage ausgebildet.

Die schematische Darstellung, Figur 5, zeigt im wesentlichen die gegenseitige Zuordnung von Schublade 6 und Montageplatte 64 beziehungsweise die Zuordnung der auf der Montageplatte 64 angeordneten, eine Fangvorrichtung 88 darstellenden Mittel zum Ausrichten und Verriegeln der Schublade 6. Dabei ist an der im wesentlichen als Seitenansicht dargestellten Schublade 6 ein Freischnitt zur Darstellung der Auswerfmittel vorgenommen und die entsprechende Partie des Gehäuses 1 der Schublade 6 zugeordnet. Die Montageplatte 64 und die auf ihr montierte Fangvorrichtung 88 sind als Schnitt gemäß der Schnittlinie AA in Figur 4 dargestellt. Mit 89 ist eine die wesentlichen elektronischen Bauteile des Fahrtschreibers tragende Leiterplatte bezeichnet. Ein auf der Leiterplatte 89 angeordneter Schalter 90 wirkt mit der Steuerkurve 82 zusammen, was nachfolgend noch näher erläutert wird.

Die Figur 5 zeigt gemäß des Bewegungspfeils die Baugruppen im Zustand des Schließens der Schublade 6. Das heißt, der Schenkel 31 der Auswerffeder 30 greift in die Nut 32 ein, die Auswerffeder 30 wird gespannt. Gleichzeitig gleiten die Fixierzapfen 45, 46 auf den schiefen Ebenen 41, 42 der Führungsbacken 38, 39 der Schublade 6, aufwärts, wobei die Brücke 49 entgegen der Wirkkraft der Schenkelfedern 72, 73 verschwenkt wird. Erreichen die Fixierzapfen 45, 46 die Senkungen 43, 44, kippt die Brücke 49 zurück, das heißt die Schublade 6 wird mittels der Wirkkraft der Schenkelfedern 72, 73 festgehalten und ist, wie bereits einleitend erläutert, durch die selbsthemmende Gestaltung der zusammenwirkenden Bauteile verriegelt.

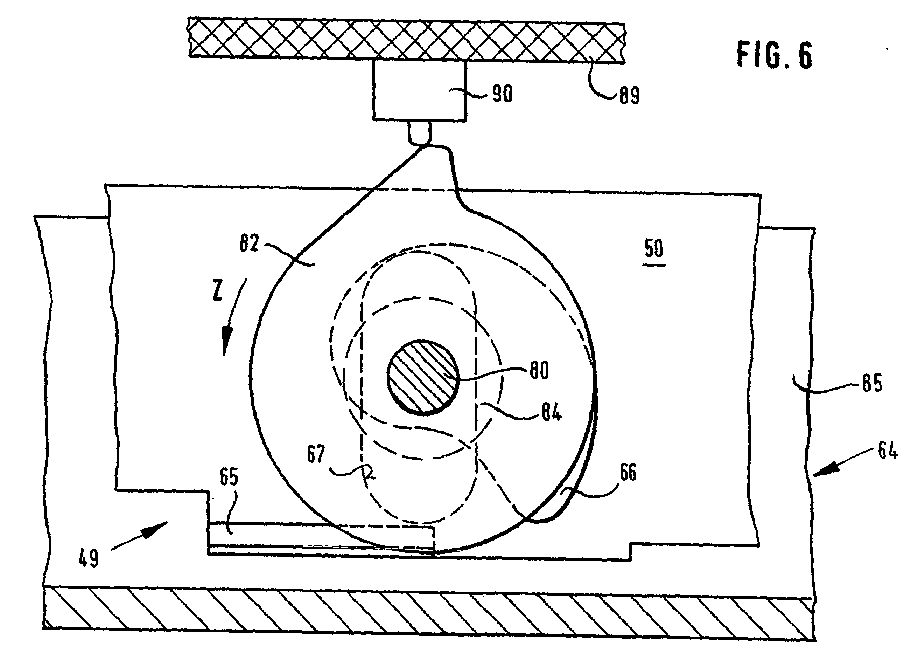

Soll die Schublade 6 geöffnet werden, so ist durch Betätigen der Taste 12 zunächst eine Ansteuerung des die Welle 80 antreibenden Laufwerkes erforderlich. Die Drehung der Welle 80 und der auf ihr befestigten Kurvenscheibe 66 die ihrerseits, an dem Lappen 65 angreift, bewirkt ein Verschwenken der Brücke 49 im Sinne eines Aushebens der Fixierzapfen 45, 46 aus den Senkungen 43, 44 und somit ein Entriegeln der Schublade 6, die durch die dann wirksam werdende Auswerffeder 30 in eine Greifposition gestoßen wird. Der Entriegelungsvorgang ist abgeschlossen, wenn die Welle 80 nach einer Umdrehung sich wieder in der Ausgangsposition befindet, das heißt, die auf der Welle 80 befestigte Steuerkurve 82 den Schalter 90 betätigt hat. Diese Stellung zeigt auch die vergrößerte Ausschnittdarstellung Figur 6.

## Patentansprüche

1. Fahrtschreiber (1) mit einer Schublade (6) in welcher die Zentrier- und Mitnahmemittel (20) für die als Aufzeichnungsträger dienenden Diagrammscheiben (18) gelagert und mit welcher eingelegte Diagrammscheiben(18) zwischen einer Registrier- und einer Eingabe-/Entnahmeposition bewegbar sind sowie mit Mitteln (88) welche ein exaktes Ausrichten und ein Verriegeln der Schublade (6) in der Registrierposition gestatten,
**dadurch gekennzeichnet,**
**daß** die Mittel (88) zum Ausrichten und Verriegeln der Schublade (6) in der Registrierposition eine quer zur Führung der Schublade (6) verschwenkbare Brücke (49) umfassen, daß an der Brücke (49) in einer Ebene parallel zu deren Drehachse Fixierzapfen (45, 46) befestigt sind,
**daß** die Brücke (49) in dem Fahrtschreiber derart gelagert ist, daß die Fixierzapfen (45, 46) stets in den Bewegungsraum der Schublade (6) eingreifen,
**daß** in der Schublade (6) den Fixierzapfen (45, 46) zugeordnete Senkungen (43, 44) ausgebildet sind und
**daß** zum Ineingriffbringen der Fixierzapfen (45, 46) mit den Senkungen (43, 44) beim Zuschieben der Schublade (6), die Schublade (6) mit den Fixierzapfen (45, 46) zugeordneten schiefen Ebenen (41, 42) versehen ist.

2. Fahrtschreiber nach Anspruch 1,
**dadurch gekennzeichnet,**
**daß** die Fixierzapfen (45, 46) konisch ausgebildet und die Senkungen (43, 44) in der Schublade (6) den Fixierzapfen (45, 46) entsprechend konisch geformt sind.

3. Fahrtschreiber nach Anspruch 2,
**dadurch gekennzeichnet,**
**daß** die Stirnflächen der Fixierzapfen (45, 46) ballig ausgebildet sind.

4. Fahrtschreiber nach Anspruch 2 oder 3,
**dadurch gekennzeichnet,**
**daß** die Lage der Drehachse der Brücke (49) und die Konizität der Fixierzapfen (45, 46) und der diesen zugeordneten Senkungen (43, 44) derart gewählt sind, daß beim Herausziehen der Schublade (6) eine Selbsthemmung zwischen der Brücke (49) und der Schublade (6) erfolgt.

5. Fahrtschreiber nach Anspruch 1,
**dadurch gekennzeichnet,**
**daß** die Brücke (49) mittels eines Biegefedergelenkes im Gehäuse (1) des Fahrtschreibers schwenkbar gelagert ist.

6. Fahrtschreiber nach Anspruch 1,
**dadurch gekennzeichnet,**
**daß** die Brücke (49) u-förmig gestaltet ist und
**daß** die Fixierzapfen (45, 46) an den Enden der Schenkel (47, 48) der Brücke (49) angebracht sind.

7. Fahrtschreiber nach Anspruch 6,
**dadurch gekennzeichnet,**
**daß** die Brücke (49) als Wippe ausgebildet ist, an der einerseits die Fixierzapfen (65, 66) angeordnet sind und andererseits Mittel zum Entriegeln der Schublade (6) angreifen.

8. Fahrtschreiber nach Anspruch 7,
**dadurch gekennzeichnet,**
**daß** die Brücke (49) an einer Montageplatte (64) des Fahrtschreibers gelagert ist und die Schenkel (47, 48) der Brücke (49) derart abgewinkelt ausgebildet sind, daß sie durch geeignete Ausschnitte (74, 75) in der Montageplatte (64) von der einen Seite der Montageplatte (64) auf die andere Seite der Montageplatte (64) durchgreifen.

9. Fahrtschreiber nach Anspruch 7,
**dadurch gekennzeichnet,**
**daß** jedem Schenkel (47, 48) der Brücke (49) ein Biegefedergelenk (58, 59) zugeordnet ist und
**daß** ein zusätzlicher Kraftspeicher für die für das Ausrichten und Verriegeln der Schublade (6) erforderliche Kraft vorgesehen ist.

10. Fahrtschreiber nach Anspruch 9,
**dadurch gekennzeichnet,**
**daß** als zusätzlichen Kraftspeicher zwei vorzugsweise im Übergangsbereich der Schenkel (47, 48) und des Joches (50) der Brücke (49) angreifende Schenkelfedern (72, 73) vorgesehen sind.

## Claims

1. Tachograph (1) having a drawer (6), in which the centring and carry-along means (20) for the tachograph discs (18) serving as the recording medium are mounted, and with which inserted tachograph discs (18) can be moved between a recording position and an input/removal position, and having means (88) which permit an exact alignment and locking of the drawer (6) in the recording position, **characterized in that** the means (88) for aligning and locking the drawer (6) in the recording position comprise a bridge (49) which can be pivoted transversely with respect to the guiding of the drawer (6), **in that** positioning pins (45, 46) are fastened on the bridge (49) in a plane parallel to its axis of rotation, **in that** the bridge (49) is mounted in the tachograph in such a manner that the positioning pins (45, 46) always engage in the space in which the drawer (6) moves, **in that** the depressions (43, 44) assigned to the positioning pins (45, 46) are formed in the drawer (6), and **in that** in order to bring the positioning pins (45, 46) into engagement with the depressions (43, 44) when closing the drawer (6), the drawer (6) is provided with inclined planes (41, 42) assigned to the positioning pins (45, 46).

2. Tachograph according to Claim 1, **characterized in that** the positioning pins (45, 46) are of conical design and the depressions (43, 44) in the drawer (6) are shaped conically corresponding to the positioning pins (45, 46).

3. Tachograph according to Claim 2, **characterized in that** end surfaces of the positioning pins (45, 46) are of spherical design.

4. Tachograph according to Claim 2 or 3, **characterized in that** the position of the axis of rotation of the bridge (49) and the conicity of the positioning pins (45, 46) and of the depressions (43, 44) assigned to the latter are selected in such a manner that when the drawer (6) is pulled out, automatic locking between the bridge (49) and the drawer (6) takes place.

5. Tachograph according to Claim 1, **characterized in that** the bridge(49) is mounted pivotably in the housing (1) of the tachograph by means of a flexural spring joint.

6. Tachograph according to Claim 1, **characterized in that** the bridge (49) is of U-shaped design, and **in that** the positioning pins (45, 46) are fitted at the ends of the legs (47, 48) of the bridge (49).

7. Tachograph according to Claim 6, **characterized in that** the bridge (49) is designed as a rocker, on which, firstly, the positioning pins (65, 66) are arranged and, secondly, means for unlocking the drawer (6) act.

8. Tachograph according to Claim 7, **characterized in that** the bridge (49) is mounted on a mounting plate (64) of the tachograph and the legs (47, 48) of the bridge (49) are of angled design in such a manner that they reach from the one side of the mounting plate (64) to the other side of the mounting plate (64) through suitable cutouts (74, 75) in the mounting plate (64).

9. Tachograph according to Claim 7, **characterized in that** each leg (47, 48) of the bridge (49) is assigned a flexural spring joint (58, 59), and **in that** an additional force accumulator is provided for the force required for aligning and locking the drawer (6).

10. Tachograph according to Claim 9, **characterized in that** two leg springs (72, 73) preferably acting in the transition region of the legs (47, 48) and of the yoke (50) of the bridge (49) are provided as the additional force accumulator.

## Revendications

1. Tachygraphe (1) comportant un tiroir (6), dans lequel sont logés les moyens de centrage et d'entraînement (20) destinés aux disques-diagrammes (18) servant de supports d'enregistrement et grâce auquel les disques-diagrammes (18) insérés sont mobiles entre une position d'enregistrement et une position de placement/prélèvement et comportant des moyens (88) permettant une orientation exacte et un verrouillage du tiroir dans la position d'enregistrement,
**caractérisé en ce que**
les moyens (88) permettant d'orienter et de verrouiller le tiroir (6) dans la position d'enregistrement comprennent un pont (49) pouvant pivoter transversalement à la glissière du tiroir (6),
des tenons de fixation (45, 46) sont fixés sur le pont (49) dans un plan parallèle à son axe de pivotement,
le pont (49) est logé dans le tachygraphe de telle sorte que les tenons de fixation (45, 46) pénètrent toujours dans l'espace de déplacement du tiroir (6),
des renfoncements coniques (43, 44) associés aux tenons de fixation (45, 46) sont réalisés dans le tiroir (6) et,
pour assurer la mise en prise des tenons de fixation (45, 46) avec les renfoncements coniques (43, 44) lors de la fermeture du tiroir (6), le tiroir (6) est pourvu de plans inclinés (41, 42) associés aux tenons de fixation (45,46).

2. Tachygraphe selon la revendication 1,
**caractérisé en ce que**
les tenons de fixation (45, 46) présentent une forme conique et que les renfoncements (43, 44) ménagés dans le tiroir (6) sont d'une forme conique correspondant à celle des tenons de fixation (45, 46).

3. Tachygraphe selon la revendication 2,
**caractérisé en ce que**
les faces terminales des tenons de fixation (45, 46) sont de forme bombée.

4. Tachygraphe selon la revendication 2 ou 3,
**caractérisé en ce que**
la position de l'axe de pivotement du pont (49) et la conicité des tenons de fixation (45, 46) ainsi que les renfoncements coniques qui sont destinés à les recevoir sont sélectionnés de telle sorte qu'il se produit, lors de l'ouverture du tiroir (6), un autoblocage entre le pont (49) et le tiroir (6).

5. Tachygraphe selon la revendication 1,
**caractérisé en ce que**
le pont (49) est logé de manière à pouvoir pivoter dans le boîtier (1) du tachygraphe au moyen d'une articulation à ressort spiral.

6. Tachygraphe selon la revendication 1,
**caractérisé en ce que**
le pont (49) est réalisé en forme de U et **en ce que**
les tenons de fixation (45, 46) sont fixés aux extrémités des branches (47, 48) du pont (49).

7. Tachygraphe selon la revendication 6,
**caractérisé en ce que**
le pont (49) est réalisé en tant que bascule, sur laquelle sont disposés, d'un côté, les tenons de fixation (65, 66) et agissent, de l'autre côté, des moyens permettant de déverrouiller le tiroir (6).

8. Tachygraphe selon la revendication 7,
**caractérisé en ce que**
le pont (49) est logé sur une plaque de montage (64) du tachygraphe et **en ce que** les branches (47, 48) du pont (49) sont pliées de telle sorte que celles-ci passent à travers des évidements appropriés (74, 75) ménagés dans la plaque de montage (64) d'un côté de la plaque de montage (64) à l'autre côté de la plaque de montage (64).

9. Tachygraphe selon la revendication 7,
**caractérisé en ce que**
chaque branche (47, 48) du pont (49) est pourvue d'une articulation à ressort spiral (58, 59) et
**en ce qu'**un dispositif supplémentaire d'accumulation d'énergie est prévu pour fournir la force nécessaire à l'orientation et au verrouillage du tiroir (6).

10. Tachygraphe selon la revendication 9,
**caractérisé en ce que**
deux ressorts à branches (72, 73) sont prévus en tant que dispositif supplémentaire d'accumulation d'énergie, agissant de préférence dans la zone de transition entre les branches (47,48) et l'arche (50) du pont (49).
